# EUROPEAN PATENT SPECIFICATION

(11) **EP 1 636 120 B1**
(45) Date of publication and mention of the grant of the patent: **27.08.2008**
(21) Application number: 04733838.9
(22) Date of filing: 19.05.2004
(51) Int. Cl.: B65G 1/04

(54) **ARRANGEMENT AND METHOD IN CIRCUMFERENTIAL STORAGE AND A TRANSFERRING DEVICE IN THE CIRCUMFERENTIAL STORE**
ANORDNUNG UND VERFAHREN ZUR RINGLAGERUNG UND TRANSFERVORRICHTUNG IM RINGLAGER
DISPOSITIF ET PROCEDE DANS UN SYSTEME DE STOCKAGE CIRCULAIRE, ET DISPOSITIF DE TRANSFERT DANS L'UNITE DE STOCKAGE CIRCULAIRE

(30) Priority: 20.05.2003 FI 20030748
(43) Date of publication of application: 22.03.2006
(73) Proprietor: LAKOME OY, 40320 Jyväskylä (FI)
(72) Inventor: LEHTONEN, Jorma, FI-41710 Rutalahti (FI)
(74) Representative: Helke, Kimmo Kalervo
(86) International application number: PCT/FI2004/050072
(87) International publication number: WO 2004/103863

(56) References cited:
- EP-A1- 0 799 776
- DE-A1- 4 432 856
- DE-A1- 10 019 541
- DE-U1- 20 206 193
- US-A- 4 232 988
- US-A- 4 252 488
- US-A- 5 213 463

## Description

The present invention relates to an arrangement in circumferential storage, particularly in connection with a multi-circumferential store, the arrangement including at least one circumferential-store unit, which comprises several concentric rings arranged to rotate, in which rings package locations are arranged on top of each other, and which rings can be rotated relative to each other, in such a way that access to at least some of the package locations of the rings is arranged through other rings. In addition, the invention also relates to a transferring device and a method in circumferential storage.

Various kinds of warehouse systems are known in the storage of different items. One example is the traditional pallet warehouse arranged in a rectangular space. This generally forms a matrix-like arrangement, in which there are aisles for the fork-lift trucks, with rows abutting on them for the items being stored. In these, the items, such as pallets, are in rows arranged for them, for example, on shelves. Access to the shelves is from a fork-lift truck aisle at the end of each row. Depending on their nature, the items may also be stacked on top of each other, without any shelf arrangement.

However, there are certain problems relating to such a pallet warehouse. This is because a fork-lift truck aisle only gives access to items in the rows nearest to the aisle. Thus, to reach an item in the centre of a row, the packages in front must first be moved out of the way. To solve this problem, only one items of one kind can be stored in each row. In that case, however, if there are different numbers of items of different kinds, there may be a great deal of empty space in the rows. In terms of logistics, this is extremely disadvantageous, and attempts have therefore been made to develop more efficient storage systems.

Various kinds of shelf lifts are known from the prior art. The use of these already achieves a considerably more efficient use of space.

Further, the prior art is also represented by various circumferential (multi-ring) stores. Some examples that can be mentioned include the systems disclosed in US patents 4,232,988 and 4,252,488 (Kochanneck). In US - 4,252,488 has been disclosed a circumferential store in which a service aisle has been arranged to obtain access to the holders. Further, a store arrangement, in which a circumferential arrangement is used is also known from RU patent 2057691 (Ovcharenko).

The known circumferential stores are, however, quite complex in their basic structure. Particularly their package-handling equipment, or even more particularly their equipment for inserting and storing packages in the store, are quite complex. Almost without exception, these are arranged in such a way that they take up effective storage surface area from the interior of the store itself. Further, they are difficult to service, because they are often located inside the store, i.e. in the rings.

The invention is intended to create a new circumferential storage arrangement, which is simple both to construct and to use. The characteristic features of the arrangement according to the invention are stated in Claim 1. In addition, the invention also relates to a transferring device in a circumferential store, the characteristic features of which are stated in Claim 8 and a storage method, the characteristic features of which are stated in Claim 9.

In the arrangement according to the invention, the transferring devices for moving the packages are arranged in a surprising manner, in such a way that there is no need to arrange transferring devices inside the actual storage unit, particularly on its rings. Thus, the space on the rings can be utilized entirely for the storage of the packages.

The transferring devices for putting packages into, and taking them out of the circumferential store unit are formed of a vertical column structure, a slide arrangement in connection with it, and, in connection with the slide arrangement, a boom element with devices at the end of it for gripping and releasing a package. All of those components are outside the outer ring of the circumferential store unit. According to a second embodiment, the transferring device of this circumferential store can also be in the inner centre of the circumferential store unit.

The boom element is formed of a telescopic boom. In this way, even the innermost ring of the circumferential store, can be operated easily, without transferring devices arranged on the rings of the circumferential store unit.

According to another embodiment, the vertical column structure can be horizontally rotatable. Thus even several circumferential store units can be arranged around single transferring devices, and can all be taken care of using even a single transferring device.

The vertical column structure can be formed of, for example, two vertical bars. A slide arrangement for moving the boom element in an up and down direction can belong on the vertical bars.

The circumferential store according to the invention can even be formed from shelf modules that are, as such known. They can be fitted to each other using spacer pieces. Such a construction permits an inexpensive arrangement, which has not been possible according to the prior art, because the package transferring devices have had to be located inside the store.

Other characteristic features of the invention are stated in the accompanying Claims while more advantages achieved using the invention are referred to in the description portion.

The invention, which is in no way restricted to the embodiment presented in the following, is examined in greater detail with reference to the accompanying drawings, in which
- Figure 1: shows a partial cross-section of one circumferential store according to the invention,
- Figure 2: shows a side view of one example of an embodiment of the transferring device of the circumferential store,
- Figure 3: shows a cross-sectional top view of the transferring device shown in Figure 2,
- Figure 4: shows a schematic diagram of one example of the boom,
- Figures 5a and 5b: show schematic diagrams of some examples of the cradle,
- Figure 6: shows a cross-section of an embodiment of the circumferential store in the storage of pallet packages,
- Figure 7: shows an embodiment of the circumferential store in the storage of reels,
- Figure 8: shows an embodiment of the store system applied to several circumferential store units, and
- Figure 9: shows a schematic diagram of the bottom part of the circumferential store unit in greater detail.

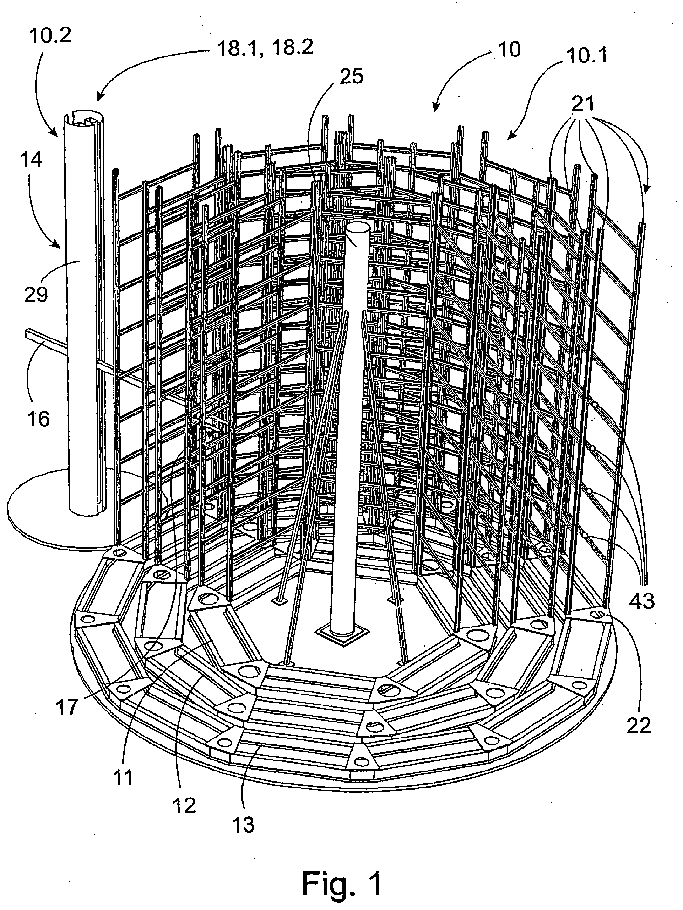

Figure 1 shows a partial cross-section of one example of the circumferential store arrangement 10. It includes mainly at least one store sub-unit 10.1 and package-handling devices 10.2. The circumferential store 10 according to the invention can have one or several rings. Stores with several rings can also be termed a multi-ring store 10.

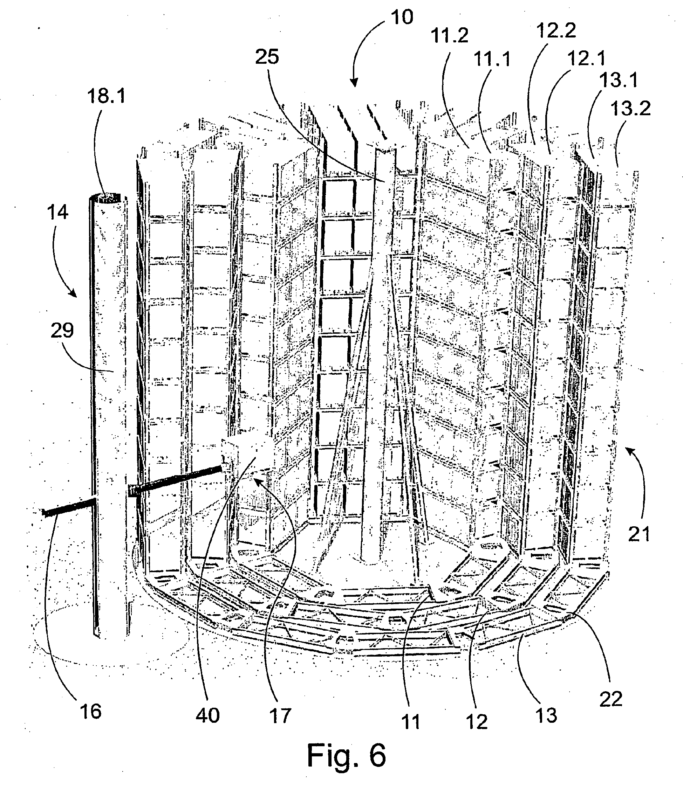

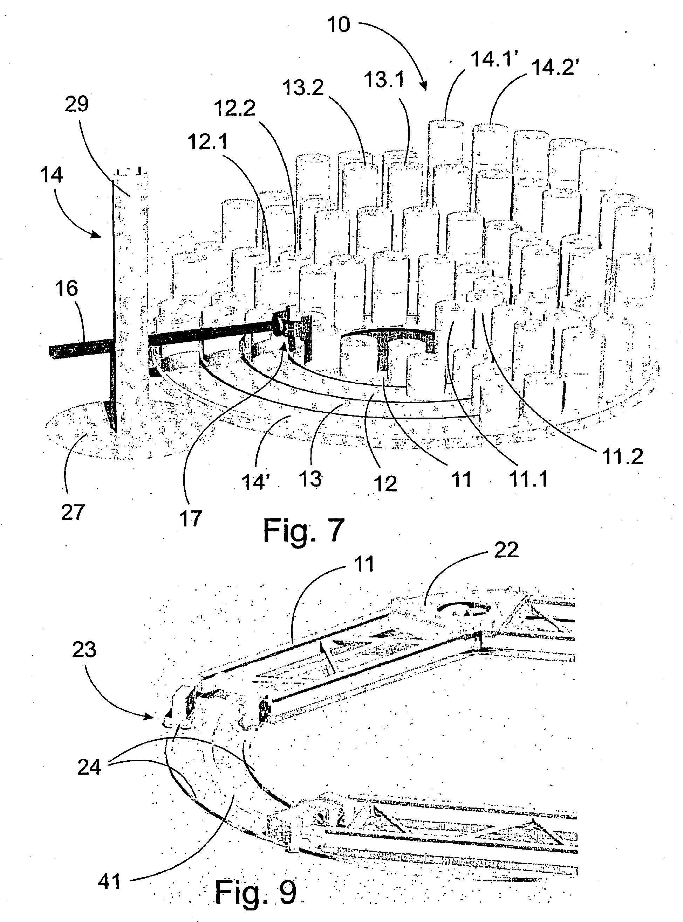

The multi-ring store 10 according to the invention includes several concentric rings 11 - 13 set inside each other and arranged to rotate independently. The rings 11 - 13 can be in a circular arrangement, as shown in the figures, or, on the other hand, in an elliptical arrangement. Together, the rings 11 - 13 can form a totality of several rings controlled automatically. In the circumferential store 10, products can be stored on pallets, or even without them, in very diverse alternatives, as can be seen from Figures 6 and 7. The store 10 can be applied to both indoor and outdoor use, or as a cold/warm storage space, for long or short-term storage. The store 10 is characterized by a large capacity, but nevertheless a small surface area requirement. The use of the store 10 according to the invention achieves short package-transfer trips, for example, compared to known warehouse technologies. One example of a store sub-unit 10.1, in this case a closed-ring store, has dimensions of a height of 6 - 14 m and an outer diameter of 10 15 m.

The rings 11 - 13 can be formed of standard shelf modules 21, that are as such known, together with their accessories. The shelf modules 21 are fitted together with spacer pieces 22 that permit them to be given a circular form. In Figure 1, the shelf modules 21 are dimensioned in such a way that they can be used to store, for example, products arranged on pallets.

Figure 9 shows a schematic diagram of more details of an example of the bottom part of the circumferential store 10. It shows that, connected to the spacer pieces 22, there can be rotating elements 23 set on shafts, which are fitted onto rail elements 24, such as a pair of rails, in the ring-shaped base construction 27 of the store 10. The pairs of rails 24 are used to carry the load running through the store shelves 21. The rotating elements 23 act as support wheels, in at least some of which an electric drive motor, for example, is arranged. Using the support wheels 23 and the drive motors, a single store ring 11 - 13 can be turned at a regulated speed precisely to its desired position. Rotation can be in both directions.

Thus, in the circumferential store 10 according to the invention, the rings 11 - 13 can be arranged to make a complete revolution. The drive power rotating the rings 11 - 13, i.e. in this case electricity, can be brought to a conductor-rail system 41, for example, through wiper contacts.

The collector carriages of the conductor-rail system can be embedded, for example, in the base structures 27 (floor) of the store 10, or they can also be installed on the surface of the floor 27. In this case, the collector carriages do not move with the rings 11 - 13. An external power supply is connected to the collector carriages. Two different types of collector carriage can be installed consecutively on a single conductor rail 41. One can have carbon brushes and the other metal brushes.

The conductor rails 41 can be installed, for example, in the sub-frame structures of the rings 11 - 13. The conductor rails 41 rotate along with the rings 11 - 13. The conductor rails 41 are open underneath. The conductor rail 41 is available bent to the desire radius.

The power supply is taken from the conductor rails 41 to a frequency converter, which also may rotate along with the rings 11 - 13. There can be several frequency converters on the same ring 11 - 13 and they can be located in connection with the support wheels 23 and the drive motor. According to Figure 9, the support wheels 23 can be at the spacer pieces 22. There can be support wheels 23 on both sides of the rails 24, as shown in Figure 9, and also on top of the rail 24. Of these, the support wheels on top of the rails 24, for example, can be driven.

As can be seen in Figures 1, 6, 7, and 8, package locations 11.1, 11.2, 12.1, 12.2, 13.1, 13.2, 14.1', 14.2' are arranged in the rings 11 - 13 (14'). The package locations can be formed, for example, of shelving structures 21 arranged annularly on top of each other, as in the embodiments of Figures 1, 6, and 8. On the other hand, a fixed shelving structure 21 is in no way essential to the invention, if the kind of items being stored permits. Figure 7 shows an example of just such an embodiment. In it, the packages being stored are paper reels 11.1, 11.2 - 14.1', 14.2' stacked on top of each other. In that case, it is sufficient if there is access to the uppermost packages of each ring 11 - 14', in this case through the outer rings 14', 13, 12. The lower level of the rings 11 - 14' is now flat, in order to be able to store the paper reels on top of it.

The rings 11 - 13 can be rotated relative to each other, in such a way that access by a transferring device 10.2 outside the store 10 to at least some, preferably to all of the package locations 11.1, 11.2, 12.1, 12.2, 13.1, 13.2 of the rings 11 - 13 can be arranged through a package location at a corresponding height of the other rings 12, 13. Thus, on each shelf row in a vertical direction on each outer ring 12 - 13, there is at least one empty location, through which access can be arranged to the locations in a corresponding shelf row in the inner store rings 11, 12. As the transferring device 10.2 is outside the store unit 10.1, in this embodiment it is not necessary to keep empty package locations in the innermost ring 11, as a passage need not be arranged through it to any of the rings.

There can be a support column 25 in the centre of the store component 10.1 of the circumferential store 10.1, as shown in the embodiment figures. The support column 25 can be supported by stays 26.2. On the other hand, there can also be a transferring device 10.2, according to the invention in place of the support column 25. This requires that, if the store has several rings 11 - 13, there must also be at least one empty package location on each shelf row in the innermost ring, from which it is possible to operate the outer rings 12, 13, or move packages from the inner rings 11, 12 out of the store unit 10.2.

The circumferential store's 10 transferring device 10.2 is a very important solution in terms of the invention. In Figure 1, the transferring device 10.2 can be seen as a vertical column 14, with boom 16, which can be moved vertically and horizontally, arranged in connection with it. The vertical column structure 16 can be covered with a casing element 29.

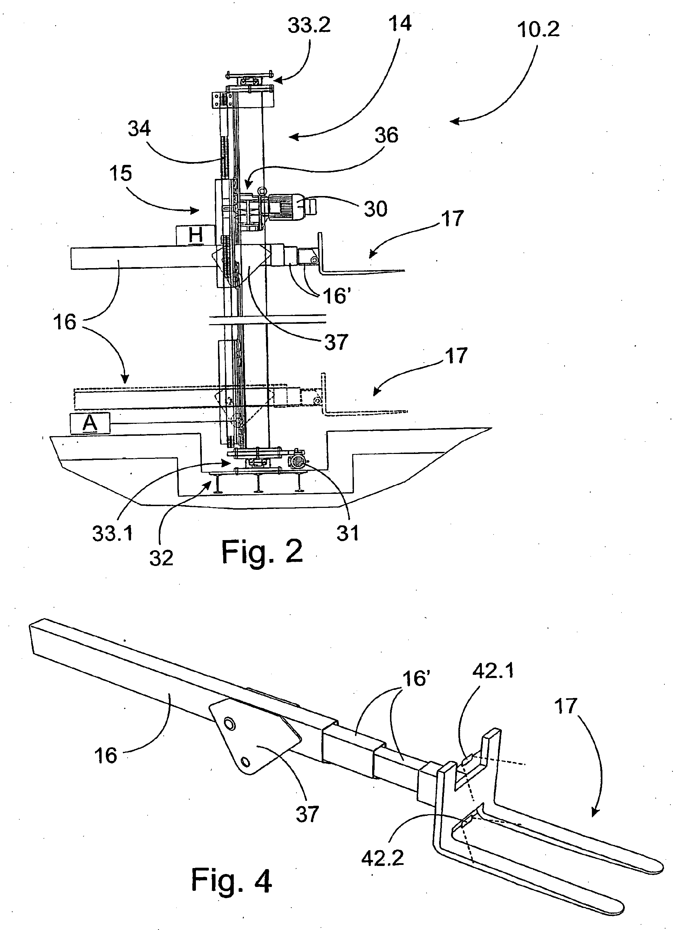

Figures 2 - 4 shows the devices 10.2 for inserting and removing packages into and out of the store unit 10.1, more generally the transferring device, of one embodiment in slightly more detail, from different directions. In the store system 10 according to the invention, the particularly inventive solution is that transferring devices 14 - 17 are arranged outside the store unit 10.1, for inserting and removing packages, more generally for handling packages, in connection with the circumferential store unit 10.1. Thus, structure of the store unit 10.1 can be implemented very simply and the entire circumferential store 10 can be utilized efficiently for storing packages.

In this connection, a more precise definition of the expression 'outside the store unit 10.1' means that the transferring devices 10.2 are not installed in the rings 11 - 14'. Thus, the transferring device can also be in the centre of the rings 11 - 14', in place of the support column 25. There can then be a corresponding support column arrangement outside of the store unit 10.1, for supporting the transferring device 10.2.

According to one first embodiment, these transferring devices 10.2 can be itemized more precisely as being formed of a vertical column structure 14, a slide arrangement 15, and a boom element 16 with an attached gripper device 17. Together these form a controllable totality, which controls the handling of the products being stored, taking into account the horizontal and vertical differences in location of the store rings 11 - 13 set inside each other. The totality can be controlled, using, for example, automation A. Thus the distance and time required for moving the products being stored can be minimized. Unmanned operation of the storage event is also possible, by applying an automated store system and connecting the system to the control system of the store 10. Next is a description of one example of the construction of the transferring device 10.2, i.e. the devices 10.2 for inserting and removing packages into and out of the circumferential store unit 10.2, as an individual embodiment, without in any way restricting it to this.

The vertical column 14 can be a floating type and anchored in a fixed position, i.e. so that it cannot turn, in the floor structures 32 of the store 10. On the other hand, it can also be also arranged to be rotatable horizontally about its centrepoint, if required by the storage system, for instance. In order to turn the vertical column 14, electricity is brought to the rotation motor 31 of the column 14, which is, for example, close to the floor 32. One example of the rotation motor is dimensioned to have an output of 1,1 - 2 kW. The column 14 is turned by the electric motor 31, for example, using a belt drive.

The vertical column 14 is positioned using a feedback-connected electric motor 31, for example, a gear-head motor. Feedback-connection data is obtained, for example, from a pulse sensor, or in some other suitable manner. The angle of rotation is obtained from a pulse sensor connected to the rotating column 14. The pulse sensor can be used to eliminate possible slip in the belt and errors in the rotation mechanism. The pulse sensor permits better controlled ramps and more precise control of operation. For example, in an emergency stop the movement can be stopped using the fastest possible braking ramp. Braking must, however, be arranged to take place in such a way that the load does not move on the pallet during an emergency stop. The control circuit A has limits for rotation to the left and the right, which limit the turning circle of the column 14.

By using a feedback-connection, which can also be applied to the operation of the other moving components 15, 16 forming part of the transferring device 10.2, several important advantages are gained. The transferring device 10.2 can be operated accordingly, for example, to rotate at a speed and acceleration suitable to the mass of the load in the gripper device 17 at the time. In addition to this, the feedback-connection and automation devices A permit, for example, parking errors caused by, for example, the mass of the load and/or the distance of the boom 16 from the vertical column 14, to be detected and compensated for. This is because the mass of the load 40 may cause, for example, deflection in the operational elements 14, 16 of the transferring device 10.2, for which reason it may be necessary to carry out correcting movements when transferring the load 40 to the store or removing it from it, more generally in the operation of the transferring device 10.2. The feedback-connection A also permits these correction running options.

Frequency converter technology also permits, for example, various crawler drives in correction running, which can be used to achieve extremely precise positioning, which may be required by the limited height of the shelf locations, for instance.

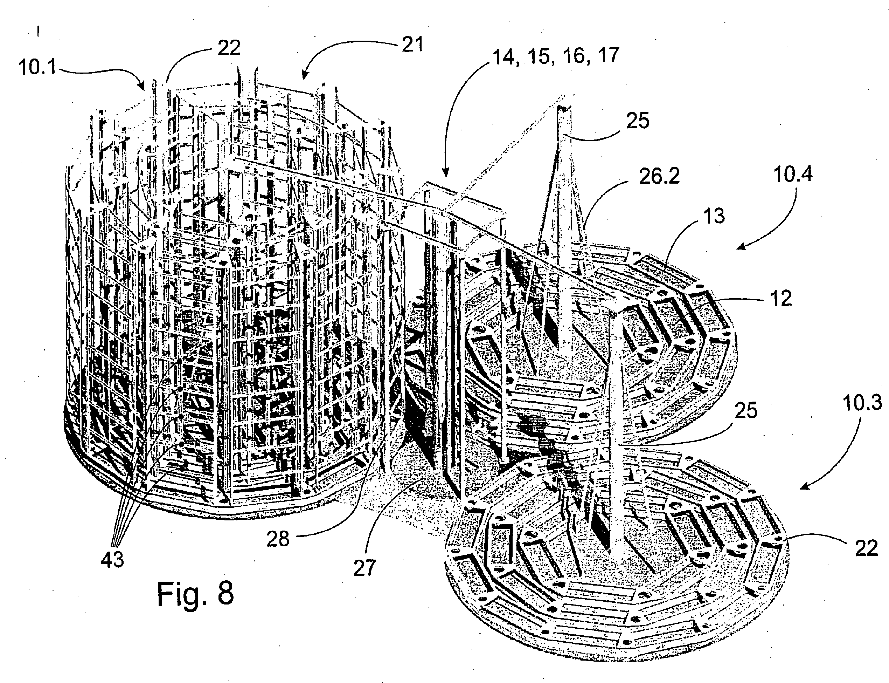

The vertical column 14 can include, as one exampled of a structural construction, at least two bars 18.1, 18.2 arranged at a distance from each other. The bars 18.1, 18.2, which can be of the so-called floating type, are attached to each other at the ends and set in bearings at their upper and lower ends, if the column 14 can be rotated radially. At the lower end, a circumferential bearing 33.1 is connected to a base 32 of the column 14. At the upper end, there is a circumferential bearing 33.2 is connected to a support flange, by means of which the column 14 can be supported on the support column 25 located in the middle of the store unit 10.1. This is shown in greater detail in Figure 8, in which there is a support bar between the upper ends of the column 14 and the support column 25. In addition, a safety zone, which is surrounded with a frame 28, can be arranged around the column 14.

In connection with the vertical bar structure 18.1, 18.2, there is a slide arrangement 15, which can be moved vertically. The horizontal boom element 16 on slides 15 is arranged in connection with the bars 18.1, 18.2, for example, to be moved vertically between them.

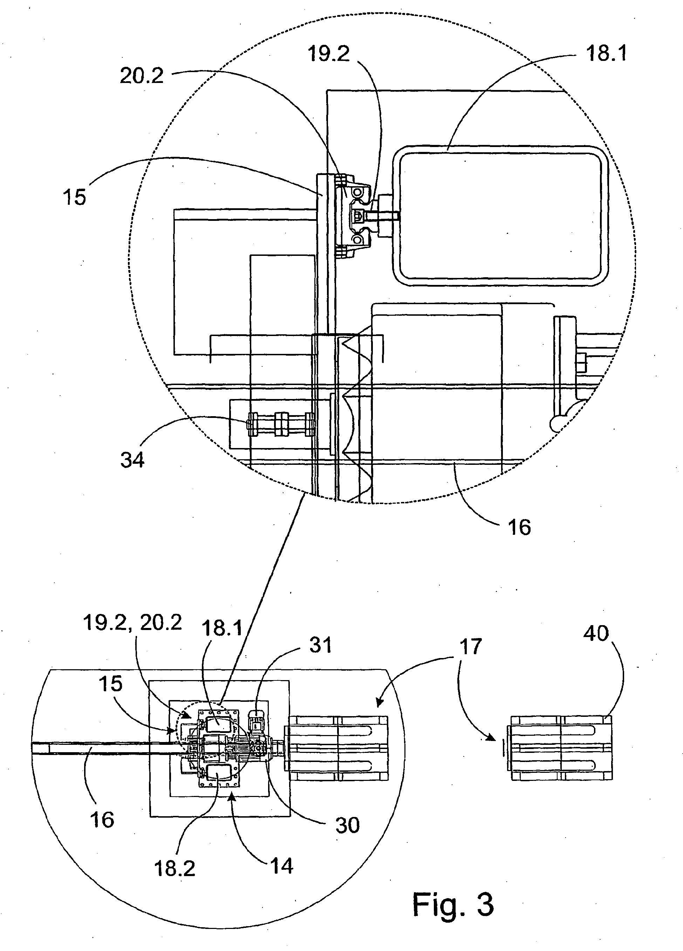

The slide arrangement 15 can include a cradle 15 with a unified construction. The cradle 15 is arranged to be moved in vertical first guide elements 19.1, 19.2 arranged in connection with the vertical bars 18.1, 18.2. The cradle 15 is equipped with second guide elements 20.1, 20.2, which form counter-pieces to the guide elements 19.1, 19.2 of the vertical bars 18.1, 18.2. The first and second guide elements 19.1, 19.2, 20.1, 20.2 can thus be fitted to each other in such a way that one set of elements 20.1, 20.2 partly enclose the second elements 19.1, 19.2 inside them horizontally, so that the cradle 15 can move vertically. This is shown in greater detail in the inset in Figure 3. The bearings-mounted counter-pieces 19.1, 19.2, 20.1, 20.2 of the cradle 15 and the bars 18.1, 18.2 are, as such, a known technique to one versed in the art. They can be implemented, for example, with linear guides. One example of this, which does not, however, restrict the choice of the linear guides, is HSR 45 A or LA, by the manufacturer THK.

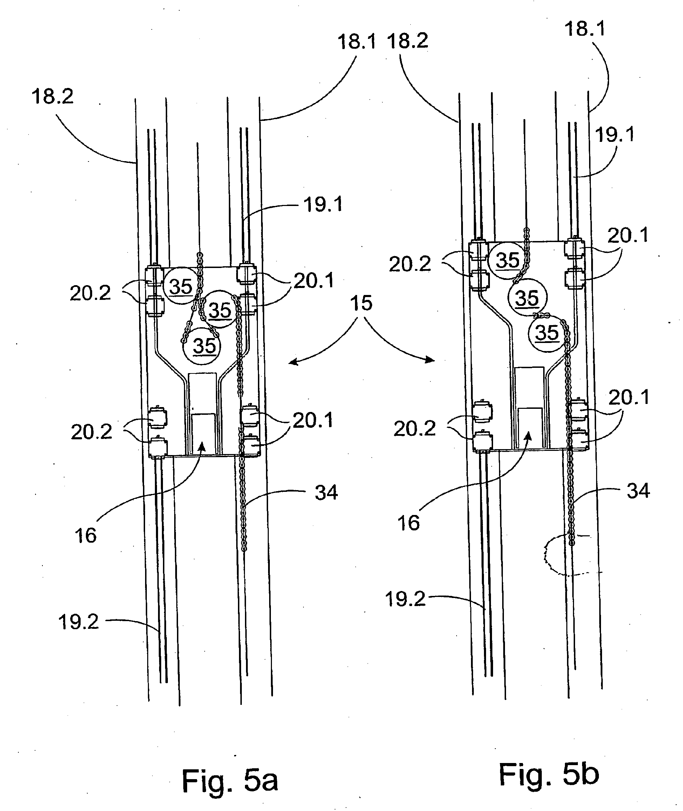

Figures 5a and 5b shows some embodiments of the cradle 15. In this case the cradle 15 is on one side of the column 14. This side is the opposite side to that on which the boom 16 and the gripper devices 17 are arranged. There can be, for example, four slide elements 20.1, 20.2 in one line of the cradle 15. There are two lines, which are next to the vertical bars 18.1, 18.2. In each line there can be two slide counter-piece pairs 19.1, 20.1, 19.2, 20.2 in the upper and lower part. The slide arrangement 15 can be implemented in other ways that with the linear guides shown as the example. For example, separate roller elements running in shafts attached to the cradle 15, for which there are guides in connection with the column 14, can also be considered.

The cradle arrangement 15 of the boom element 16 can also have its own lifting circuit. The power supply cabling to the lifting circuits of the cradle 15 is taken from the floor 32 to the upper part of the column structure 14. A power-transmission chain or lift cable suspended from the upper end of the column 14 is taken to the rising and lowering cradle structure 15. On the side of the rising and lowering cradle structure 15, there is a control case 36, in which there is the frequency converter and gear box of the lifting motor 30. The lifting motor 30, for example a gear-end motor, is in this case on the same side as the gripper devices 17. The lifting motor 30 can be dimensioned to have an output of, for example 11 - 16 kW. The casing 36 can be partly fitted between the vertical bars 18.1, 18.2.

In the embodiment shown, the power-transmission chain of the cradle 15 is formed of at least one roller chain 34, with sprocket 35 arranged for it, through which the chain 34 is arranged to run. The ends of the chain 34 can be connected to the upper and lower ends of the vertical bars 18.1, 18.2. The sprockets 35 can be connected to the cradle 15, so that they form a threaded run for the chain 34. One or several sprockets 35 can be connected to an electric-motor drive 30 with a possible gearbox/auxiliary-circuit devices 36.

The electric motor 30 is used to lift the slide 15 and thus at the same time the boom 16 arranged in connection with it. In this case too, positioning of the lifting takes place with the feedback-connected motor 30. The feedback-connection data is obtained, for example, from a pulse sensor. Positioning data for the positioning of the vertical movement of the boom 16 is obtained from a position-data sensor (USP). One standard application of a position-data sensor (USP) is in passenger-lift drives, which can be applied in the invention. The USP sensor output can thus be SSI (absolute), so that lifting-movement position data is always available.

In connection with the slide arrangement 15, there is a boom element 16, which can be moved horizontally, and which is shown in Figure 2 at two different heights. At its end there are a gripper devices 17 for gripping a package, handling it, and releasing it. One example of gripper devices is the pallet fork 17 shown in the embodiment. Other examples, without, however, in any way restricting the gripper devices 17 to them, are reel, barrel, and bale clamps, depending on the nature of the items being stored.

Figure 4 shows a diagram of the boom element 16. It can be formed of a telescopic boom 16, with gripper devices 17 connected to its end. The telescopic boom 16 with its extensions 16' can be of a construction and operation that are, as such, known, as they are in no way restricted by the invention. The gripper devices 17 are the end of the boom 16 can be detachably attached, i.e. replaceable.

The retraction and extension of the boom 16 can be controlled using its own operating circuit. The power supply of the boom 16 can be brought in a floor channel to next to the rotation mechanism 31, 33.1. The cabling is run in the column 14 to its top part. A power-transmission chain or lift chain suspended from the upper end of the column 14 is taken to the rising cradle structure 15. There is a control casing H, containing a hydraulic mechanism with a frequency converter, on top of the boom 16 at the side of the rising cradle structure 15. The boom 16 can be attached to the cradle 15 on the flanges 37 on either side of it.

The boom 16 is moved horizontally by hydraulic cylinders (not shown). The cylinders can be controlled using a constant-volume pump and direction valves. The speed of the stroke is regulated using a frequency converter to control the electric motor of the hydraulic pump H. The cylinders can be inside the boom structure 16 in a known manner.

The positioning of the horizontal movement can consist of, for instance, a feedback-connected laser sensor, a frequency converter, a motor, a hydraulic pump, a direction valve, and a hydraulic cylinder. These methods of implementation are obvious to one versed in the art and there is no need to examine them here in greater detail.

For handling items other than pallets loads, reel, box, multi-fork, or device clamps will be needed. The material other than pallet loads can be handled. Some examples are car tyres, reel-like packages such as paper reels, or bale-like packages such as cellulose bales.

If clamps are used as the gripper 17, they are also opened and closed using hydraulics H. The mechanism H used for the in/out movement of the boom is used as the hydraulic mechanism. The mechanism H can also include a direction valve, by means of which the movement of the clamp is controlled.

Next, the operations of the rings 11 - 14' are described. Each ring 11 - 14' can have its own control centre, which is equipped with a frequency converter. The frequency converter can be of a feedback-connected type, the feedback-connection of which takes place using a pulse sensor. In addition, each ring 11 - 14' can have means for providing a zero pulse for positioning operation. One example of this is an inductive sensor.

The zero pulse can be located at a free shelf position column on the ring 11 - 14', i.e. at an opening. The use of such an arrangement will limit the accumulation of possible errors to one trip around the ring, 11 - 14'.

After the frequency converter of each ring 11 - 14', one or several electric motors can be connected in parallel. These are controlled simultaneously by the frequency converter. The electric motors can be equipped with mechanical parking brakes, by means of which the rings 11 - 14' can be locked in place when operating inside them using the transferring device 10.2.

During the rotation of the rings 11 - 14', when arriving in a clockwise direction at the opening, the frequency converter can always reload the zero pulse to the memory of the parking operation.

In order to ensure the positioning of a pallet and thus also the positioning of the gripper device 17, the sensor technique or a machine-vision system can be used.

When applying positioning sensors, several separate sensors can be used to ensure the pallet and the pallet position. For example, there can be a mirror or similar reflecting surface 43 in the shelf beam 21 beneath each pallet position, from which the boom 16 and the grippe 17 can position the pallet location. The location of the mirror 43 can be detected, for example, using a DMP sensor made by SICK Oy.

In connection with the gripper 17, for example in its lower edge, there can also be an optical or laser sensor 42.2 reflecting the location, which detects the upper edge of the shelf beam. The sensor 42.2 can be used, for example to ensure that the pallet location on the shelf 21 is empty.

One other option that can be mentioned is that a bar-code reader can be installed on the gripper 17, so that it is possible to read the data on the load of the pallet into the warehouse system.

When applying a machine-vision system, real-time identification can be performed from numerous objects. Some examples of these are a pallet (FIN or EURO pallets) or the shelf beam. The desired information can be taken into account from these objects. Some examples of these are the pallet's position, side and height data, data on the pallet's fork openings, the geometrical shape of the truck fork openings and the pallets, as well as whether pallet is possibly damaged, whether a pallet is in its location or away from it, the upper surface of the horizontal boom 16 at the shelf and the detection of obstacles that may be in front of the boom when it is moving towards the pallet.

Even several different logics can be used in the store system. Examples are the Omron and Siemens logics. The machine-vision system may be connected to the logic controlling the store system, with which the machine-vision system communicates independently.

The distance of the camera 42.1, 42.2 from the front edge of the pallet can be > 1200 mm. There can be a camera at several locations in the system, such as two locations. Examples of the locations are the position of the camera 42.1, 42.2 at the height of and between the fork prongs 17, when a pallet 40 is being retrieved from the shelf 21. When the pallet 40 is being brought to the shelf 21 on the fork 17, the cameras 42.1, 42.2 can be beneath and between the prongs 17. Even more cameras can be used.

In addition to the machine-vision system, it may be necessary to arrange the lighting technology required in machine vision in connection with the store 10. The machine-vision system and the lighting of the machine-vision system must operate within the stores' 10 existing lighting environment.

It is further possible to apply, for example, bar codes, texts, or the shape of the load, when identifying the pallet 40. There are numerous alternatives.

The load profile can also be monitored using several different arrangements and-possibilities. Side overhand of the load can be monitored using optical mirror reflections with light cells or lasers. Side overhangs can also be monitored using sensors. Excessively high loads can be monitored using optical mirror reflections with light cells or lasers. Sensors can be used to monitor excessively high loads.

The system can be arranged according to the requirements of several conveyors running inwards or outwards. The store system can be supplied with conveyors that operate inwards or outwards as required. Systems without conveyors are also possible. In that case, for example, fork-lift trucks can fetch a package 40 brought by the transferring device 10.2 from the store unit 10.1.

The package 40 can be turned on the transferring device 10.2 to be within the reach of a fork-lift truck or similar fetching device. On the other hand, if the transferring device 10.2 is located at a sufficient distance from the circumferential store unit 10.1, it can also be implemented without rotation from the column 14. The transferring device 10.2 can then leave the package 40 immediately outside the store unit 10.1 and use the horizontal boom 16 to pull its gripper device 17 away from contact with the package retrieved from the store unit 10.1. After this, a fork-lift truck can pick up the package.

Thus, at least on the outermost rings 12 - 14', there must be at least one free shelf location at each shelf height. Software can be used to arrange the leaving of openings in the rings 11 - 14'. This shelf location will give the gripper devices 17 of the transferring device 10.2 access to the inner rings, right to the innermost ring 11. The free shelf locations can be in a single vertical column line on each ring 12 - 14'. This will avoid the unnecessary rotation of the rings 12 - 14' when seeking for a free shelf location. On the other, it is also possible for the free shelf locations to be a different points on different shelf positions. In that case the rings 11 - 13 will have to be rotated slightly more before a route is arranged for the transferring device 10.2 to an inner shelf location. The rings 11 - 13 can be rotated simultaneously when arranging a route to a desired shelf location. Further, the direction of rotation of each rings 11 - 13 can be set to be such that the rotation takes place over the shortest route.

A shelf from which it is desired that a package 40 is retrieved, or to which it is desired to be taken, is rotated radially to the position of the open 'passage' at the shelf location in question. The open ring passage is arranged at the location of the transferring device 10.2, so that the horizontally moving boom 16 of the transferring device 10.2 will have direct access to it. The gripper 17 of the transferring device 10.2 can be pushed by the boom 16 into the store unit 10.1 from this passage formed by the free shelf locations and can be used to operate at the passage which is turned to the desired shelf location of the desired ring. In this case, operating can be understood to mean, for example, the retrieval of a package 40 from a package location or taking a package 40 to a package location.

The openings arranged in the rings 11 - 14' can be filled only once the store unit 10.1 is finally filled. The openings will roughly double the speed of processing the material in the store.

It is also possible to apply even filling in the store unit 10.1. In that case the program fills and transfers the pallets inside the store unit 10.1 in such a way that the store unit 10.1 is filled evenly. Thus, empty and full shelves are not mixed together in the store unit 10.1. Further, it is possible to apply different kinds of programs in the circumferential store 10 according to the invention. One example of this is a pallet stacking program, in which empty pallets are stacked in free gaps on the shelves. The logic of the store system can also include a program, which sorts heavy packages in the lower parts of the store unit 10.1 and lighter ones in the upper parts of the store unit 10.1.

Information of the mass of the load being carried by the gripper 17 can be transmitted to the operator of the transferring device 10.2. This will permit the compensation of possible deflection appearing in the transferring device 10.2. If heavy packages are being handled at a sufficient distance from the column 14, deflection may appear in the boom 16, for example. Deflection in the boom 16 can then be compensated by raising it sufficiently with the slide 15. The current consumption of the drives 30, 31, H can indicate the mass being handled by the transferring device 10.2, or generally whether the transferring device 10.2 is loaded or not.

For the control of the movements of the transferring device 10.2, the main control is given information for the drives 30, 31, H of the transferring device 10.2 as to whether there is a load on its fork or not. If there is no load, the movements of the transferring device 10.2 can be run as rapid movements.

Various calibration running operations will be obvious to one versed in the art, which the store system according to the invention may demand, as well as the compensation of positioning errors caused by wear in moving parts.

Figure 8 shows an embodiment, in which several store units 10.1, 10.3, 10.4 are arranged around a single transferring device 10.2. The store units 10.1, 10.3, 10.4, of which in this case there are three, are set radially relative to the transferring device 10.2. Thus each unit 10.1, 10.3, 10.4 can be operated using a single transferring device 10.2. The vertical column construction 14 of the transferring device 10.2 is now supported by the support columns 25 arranged in the centre of each store unit 10.1, 10.3, 10.4. This achieves a very sturdy construction.

In addition to the arrangement, the invention also relates to transferring device 10.2 that can be applied in connection with one or several circumferential store units 10.1, which includes a package gripper 17. The transferring device 10.2 consists of a vertical column 14, which is preferably of a radially rotating type, a slide arrangement 15 that moves vertically in connection with the vertical column structure 14, and a set of booms 16 with grippers 17 at its end, arranged in connection with the slide arrangement 15. Such a transferring device 10.2 can be applied in connection with store units 10.1 of one or several rings. Further, such a transferring device 10.2 can be either inside or outside the store unit 10.1, as disclosed in the above examples of embodiments. It is naturally also possible to apply it to store systems including several store units 10.1, 10.3, 10.4. In that case, the vertical column of the transferring device 10.2 can rotate radially.

In addition, the invention also relates to a method in a circumferential store. According to the method, as disclosed above, the circumferential store can be operate in a surprising manner from outside of it. Thus, packages 40 can be retrieved from or taken to the store unit 10.1 using an external transferring device 10.2, which can be, according to what is stated above, on the outer circumference of the store unit 10.2, or correspondingly inside the store unit 10.1, near to its centre point, for example, at the location of the support column 25, but nevertheless installed away from the rings 11 - 14'.

It must be understood that the above description and the related figures are only intended to illustrate the present invention. The invention is thus in no way restricted to only the embodiments disclosed or stated in the Claims, but many different variations and adaptations of the invention, which are possible within the scope on the inventive idea defined in the accompanying Claims, will be obvious to one versed in the art.

## Claims

1. An arrangement (10) in circumferential storage, in connection with a multi-ring store (10.1), the arrangement (10) including at least one circumferential-store unit (10.1), which comprises several concentric closed rings (11-13) arranged to rotate relative to each other, which rings (11 - 13) package storage locations (11.1, 11.2, 12.1, 12.2, 13.1, 13.2) are arranged on top of each other and in which an access to at least some of the package locations (11.1, 11.2, 12.1, 12.2, 13.1, 13.2) of the rings (11 - 13) is possible through the other rings (11-13), **characterised in that** a transferring device (10.2) is arranged outside the circumferential store unit (10.1) for transferring packages (40) into or out of, the circumferential store unit (10.1), which device (10.2) is formed of
- a vertical column structure (14) located outside the circumferential store unit (10.1) comprising
- a slide arrangement (15) that can be moved vertically along said vertical column structure (14), and
- a telescopic boom element (16), with gripper means (17) at the end, mounted on the slide arrangement (15), which boom element (16) can be moved hori-zontally and which gripper means (17) are arranged to be moved out from the rings (11 - 13) to enable rotation of the rings (11 -13).

2. An arrangement (10) according to Claim 1, **characterized in that** the vertical column structure (14) can rotate horizontally.

3. An arrangement (10) according to Claim 1 or 2, **characterized in that** the vertical column structure (14) includes at least two vertical bars (18.1, 18.2) arranged at a distance to each other, in connection with which the boom element (16) is arranged to be moved.

4. An arrangement (10) according to any of Claims 1 - 3, **characterized in that** the slide arrangement (15) includes
- first guide elements (19.1, 19.2) arranged in connection with the vertical bars (18.1, 18.2) and
- second guide elements (20.1, 20.2) arranged to the slide arrangement (15),
which first and second guide elements (19.1, 19.2, 20.1, 20.2) can be fitted to each other, in order to move the slide arrangement (15) in an up and down direction.

5. An arrangement (10) according to any of Claim 1 - 4, **characterized in that** the slide arrangement (15) is arranged to be moved using roller-chain elements (34) fitted between the top and bottom ends of the vertical column structure (14), for which a set of sprockets (35) is arranged in connection with the slide arrangement (15).

6. An arrangement (10) according to any of Claims 1 - 5, **characterized in that** the rings (11 - 13) are formed from shelf modules (21), which are, as such, known, and which are fitted to each other using spacer pieces (22).

7. An arrangement (10) according to any of Claims 2 - 6, **characterized in that** at least two circumferential store units (10.1, 10.3, 10.4) are arranged around the transferring device (10.2).

8. A transferring device (10.2), to which a gripper (17) is fitted, in a circumferential store (10.1, 10.3, 10.4) including several concentric closed rings (11 - 13) arranged to rotate relative to each other which transferring device (10.2) is formed of
- a vertical column structure (14) and
- a slide arrangement (15) with said gripper (17), which slide arrangement (15) can be moved vertically along said vertical column structure (14),
**characterized in that**
- the vertical column structure (14) is rotatable and
- the slide arrangement (15) comprises a telescopic boom (16), with a gripper (17) at the end, which gripper (17) is arranged to be moved out from the rings (11 - 13) by the telescopic boom (16) to enable rotation of the rings (11-13).

9. A method in a circumferential storage, in connection with a multi-ring store (10.1), in which packages (40) are stored in at least one circumferential-store unit (10.1), which comprises several closed concentric rings (11-13), in which packages (11.1, 11.2, 12.1, 12.2, 13.1, 13.2, 14.1, 14.2) are stored on top of each other circumferentially in package locations on each ring (11 - 13), and in which method, when operating at a desired package location, the rings (11 - 13) of the circumferential store unit (10.1) are turned to such alignment that it is possible to operate the desired package location on the desired ring through package locations of the other rings, **characterized in that** the individual package locations of the circumferential store unit (10.1) are operated from outside of the circumferential store unit (10.1).

10. The method according to Claim 9, **characterized in that** the operation is performed using a transferring device (10.2), the operation of which is adapted to the package's (40) mass and/or its distance from the transferring device (10.2).

## Patentansprüche

1. Bei der Lagerung in einem mehrere Ringe aufweisenden Rundmagazin (10.1) einzusetzende Anordnung (10), die wenigstens eine Rundmagazin-Einheit (10.1) umfasst, die aus mehreren konzentrischen geschlossenen, relativ zueinander drehbaren Ringen (11 - 13) mit übereinander angeordneten Stellplätzen (11.1, 11.2, 12.1, 12.2, 13.1, 13.2) für die zu lagernden Gegenstände besteht, wobei wenigstens ein Teil der Stellplätze (11.1, 11.2, 12.1, 12.2, 13.1, 13.2) der Ringe (11 - 13) durch die anderen Ringe (12, 13) hindurch zugänglich ist, **dadurch gekennzeichnet, dass** außerhalb der Rundmagazin-Einheit (10.1) eine Ein-/Auslagerungsvorrichtung (10.2) zum Einlagern von Gegenständen (40) in die Rundmagazin-Einheit (10.1) bzw. Auslagern von Gegenständen (40) aus der Rundmagazin-Einheit (10.1) angeordnet ist, und diese Vorrichtung (10.2) aus
- einer Vertikalbalkenkonstruktion (14) besteht, die sich außerhalb der Rundmagazin-Einheit (10.1) befindet, und
- eine längs der besagten Vertikalbalkenkonstruktion (14) vertikal bewegliche Schlittenvorrichtung (15) und
- einen an der Schlittenvorrichtung (15) angebrachten Teleskopausleger (16) mit Greifmitteln (17) an seinem Ende aufweist, wobei der Ausleger (16) in horizontaler Richtung bewegt werden kann und die Greifmittel (17), um ein Drehen der Ringe (11 - 13) zu ermöglichen, von diesen weg verlagert werden können.

2. Anordnung (10) nach Anspruch 1, **dadurch gekennzeichnet, dass** die Vertikalbalkenkonstruktion (14) in der Horizontalen drehbar ist.

3. Anordnung (10) nach Anspruch 1 oder 2, **dadurch gekennzeichnet, dass** die Vertikalbalkenkonstruktion (14) wenigstens zwei in einem gegenseitigen Abstand angeordnete vertikale Balken (18.1, 18.2) umfasst, an denen der Ausleger (16) beweglich angeordnet ist.

4. Anordnung (10) nach irgendeinem der Ansprüche 1 bis 3, **dadurch gekennzeichnet, dass** die Schlittenvorrichtung (15)
- an den vertikalen Balken (18.1, 18.2) angeordnete erste Führungselemente (19.1, 19.2) und
- an der Schlittenvorrichtung (15) angeordnete zweite Führungselemente (20.1, 20.2) hat,
wobei die ersten und die zweiten Führungselemente (19.1, 19.2, 20.1, 20.2) zum Auf- und Abbewegen der Schlittenvorrichtung zusammengepasst werden können.

5. Anordnung (10) nach irgendeinem der Ansprüche 1 bis 4, **dadurch gekennzeichnet, dass** das Bewegen der Schlittenvorrichtung (15) durch zwischen dem oberen und dem unteren Ende der Vertikalbalkenkonstruktion (14) angeordnete Rollenkettenelemente (34) erfolgt, denen an der Schlittenvorrichtung (15) ein Zahnradsatz (35) zugeordnet ist.

6. Anordnung (10) nach irgendeinem der Ansprüche 1 bis 5, **dadurch gekennzeichnet, dass** die Ringe (11 - 13) aus an sich bekannten Regalmodulen (21) gebildet sind, die über Zwischenelemente (22) aneinandergepasst sind.

7. Anordnung (10) nach irgendeinem der Ansprüche 2 bis 6, **dadurch gekennzeichnet, dass** wenigstens zwei Rundmagazin-Einheiten (10.1, 10.3, 10.4) um die Ein-/Auslagerungsvorrichtung (10.2) herum angeordnet sind.

8. Mit einem Greifer (17) versehene Ein-/Auslagerungsvorrichtung (10.2) für ein Rundmagazin (10.1, 10.3, 10.4) mit mehreren relativ zueinander drehbar angeordneten konzentrischen geschlossenen Ringen (11 - 13), welche Ein-/Auslagerungsvorrichtung (10.2) aus
- einer Vertikalbalkenkonstruktion (14) und
- einer mit dem besagten Greifer (17) versehenen Schlittenvorrichtung (15), die längs der besagten Vertikalbalkenkonstruktion in vertikaler Richtung bewegt werden kann, besteht,
**dadurch gekennzeichnet, dass**
- die Vertikalbalkenkonstruktion (14) drehbar ist, und
- die Schlittenvorrichtung (15) einen Teleskopausleger (16) umfasst, an dessen Ende ein Greifmittel (17) angeordnet ist, das, um ein Drehen der Ringe (11 - 13) zu ermöglichen, mit dem Teleskopausleger von den Ringen (11 - 13) weg verlagert werden kann.

9. Verfahren in Verbindung mit dem Lagern in einem mehrere Ringe aufweisenden Rundmagazin (10.1), bei dem das Lagern der Gegenstände (40) in wenigstens einer Rundmagazin-Einheit (10.1) erfolgt, die mehrere geschlossene konzentrische Ringe (11 - 13) aufweist, wobei auf den auf jedem der Ringe (11 - 13) befindlichen Stellplätzen Gegenstände (11.1, 11.2, 12.1, 12.2, 13.1, 13.2, 14.1, 14.2) ringförmig übereinander gelagert werden und bei dem Verfahren beim Belegen/Leeren eines gewünschten Stellplatzes die Ringe (11 - 13) der Rundmagazin-Einheit (10.1) in eine solche Stellung gebracht werden, dass der gewünschte Stellplatz auf dem gewünschten Ring durch Stellplätze der anderen Ringe hindurch zugänglich wird, **dadurch gekennzeichnet, dass** das Belegen/Leeren einzelner Stellplätze der Rundmagazin-Einheit von außerhalb der Rundmagazin-Einheit (10.1) erfolgt.

10. Verfahren nach Anspruch 9, **dadurch gekennzeichnet, dass** das Belegen/Leeren der Stellplätze mit einer Ein-/Auslagerungsvorrichtung (10.2) erfolgt, deren Betrieb der Masse des Gegenstandes (40) und/oder seinem Abstand von der Ein-/Auslagerungsvorrichtung (10.2) angepasst wird.

## Revendications

1. Arrangement (10) dans un stockage circulaire, en liaison avec un magasin à anneaux multiples (10.1), lequel arrangement (10) inclut au moins une unité de stockage circulaire (10.1), qui comporte plusieurs anneaux concentriques fermés (11 - 13) disposés pour tourner relativement l'un à l'autre, dans lesquels anneaux (11 - 13) sont disposés l'un sur l'autre des emplacements de stockage de blocs (11.1, 11.2, 12.1, 12.2, 13.1, 13.2), de telle manière que l'accès à au moins certains des emplacements de bloc (11.1, 11.2, 12.1, 12.2, 13.1, 13.2) des anneaux (11 - 13) est possible à travers les autres anneaux (11 - 13), **caractérisé en ce qu'**un dispositif de transfert (10.2) est installé en dehors de l'unité circulaire de magasin (10.1) pour transférer les blocs (40) dans ou hors de l'unité circulaire de magasin (10.1), lequel dispositif (10.2) est formé
- d'une structure verticale en colonne (14) placée à l'extérieur de l'unité de magasin circulaire (10.1) comprenant
- un dispositif de glissière (15) qui peut être déplacé verticalement le long de ladite structure verticale en colonne (14), et
- un élément de perche télescopique (16), avec équipements de pince (17) à l'extrémité, monté sur le dispositif de glissière (15), lequel élément de perche (16) peut être déplacé horizontalement, et dont les équipements de pince (17) sont conçus pour être retirés hors des anneaux (11 - 13) et permettre ainsi la rotation des anneaux (11 - 13).

2. Arrangement (10) selon la revendication 1, **caractérisé en ce que** la structure verticale en colonne (14) peut tourner horizontalement.

3. Arrangement (10) selon les revendications 1 ou 2, **caractérisé en ce que** la structure verticale de colonne (14) inclut au moins deux barres verticales (18.1, 18.2) disposées à une certaine distance entre elle, en liaison avec lesquelles l'élément de perche (16) est prévu pour être déplacé.

4. Arrangement (10) selon l'une quelconque des revendications 1 - 3, **caractérisé en ce que** le dispositif de glissière (15) inclut
- des premiers éléments de guide (19.1, 19.2) disposés en liaison avec les barres verticales (18.1, 18.2) et
- des deuxièmes éléments de guide (20.1, 20.2) montés sur le dispositif de glissière (15),
lesquels premiers et deuxièmes éléments de guide (19.1, 19.2, 20.1, 20.2) peuvent être adaptés les uns aux autres, afin de déplacer le dispositif de glissière (15) de haut en bas.

5. Arrangement (10) selon l'une quelconque des revendications 1 - 4, **caractérisé en ce que** le dispositif de glissière (15) est prévu pour être déplacé en utilisant des éléments de chaîne à rouleaux (34) adaptés entre les extrémités supérieure et inférieure de la structure verticale en colonne (14), et pour lesquels un ensemble de pignons (35) est installé en liaison avec le dispositif de glissière (15).

6. Arrangement (10) selon l'une quelconque des revendications 1 - 5, **caractérisé en ce que** les anneaux (11 - 13) sont formés de modules d'étagère (21), qui sont connus en tant que tels, et qui sont reliés entre eux par des morceaux d'entretoise (22).

7. Arrangement (10) selon l'une quelconque des revendications 2 - 6, **caractérisé en ce qu'**au moins deux unités circulaires de magasin (10.1, 10.3, 10.4) sont disposées autour du dispositif de transfert (10.2).

8. Dispositif de transfert (10.2), auquel est fixée une pince (17), dans un magasin circulaire (10.1, 10.3, 10.4) comprenant plusieurs anneaux concentriques fermés (11 - 13) disposés pour tourner relativement l'un à l'autre, lequel dispositif de transfert (10.2) comprend
- une structure verticale en colonne (14) et
- un dispositif de glissière (15) avec ladite pince (17), lequel dispositif de glissière (15) peut être déplacé verticalement le long de ladite structure verticale en colonne (14),
**caractérisé en ce que**
- la structure verticale en colonne (14) est rotative et que
- le dispositif de glissière (15) comporte une perche télescopique (16), avec une pince (17) à l'extrémité, laquelle pince (17) est conçue pour être retirée hors des anneaux (11 - 13) par la perche télescopique (16), permettant ainsi la rotation des anneaux (11 - 13).

9. Méthode dans un stockage circulaire, en liaison avec un magasin à anneaux multiples (10.1), dans lequel les blocs (40) sont stockés dans au moins une unité de stockage circulaire (10.1), qui comporte plusieurs anneaux concentriques fermés (11 - 13), dans lesquels les blocs (11.1, 11.2, 12.1, 12.2, 13.1, 13.2, 14.1, 14.2) sont stockés circulairement l'un sur l'autre dans des emplacements prévus pour eux sur chaque anneau (11 - 13), et dans laquelle méthode, quand on manoeuvre le système à un emplacement de bloc désiré, on fait tourner les anneaux (11 - 13) de l'unité circulaire de magasin (10.1) pour les aligner de telle façon qu'il est possible d'accéder à l'emplacement de bloc désiré sur l'anneau désiré au travers des emplacements de bloc des autres anneaux, **caractérisée en ce que** les emplacements de bloc individuels de l'unité circulaire de magasin (10.1) sont actionnés à partir de l'extérieur de l'unité circulaire de magasin (10.1).

10. Méthode selon la revendication 9, **caractérisée en ce que** l'opération est exécutée à l'aide d'un dispositif de transfert (10.2), dont le fonctionnement est adapté à la masse du bloc (40) et/ou à sa distance par rapport au dispositif de transfert (10.2).
